# FASCICULE DE BREVET EUROPEEN

(11) **EP 4 717 595 B1**
(45) Date de publication et mention de la délivrance du brevet: **18.11.2026**
(21) Numéro de dépôt: 25178509.3
(22) Date de dépôt: 23.05.2025
(51) Int. Cl.: B64C 25/34, B64C 25/58, B64D 45/02

(54) **ATTERRISSEUR MUNI D'UN SYSTEME DEPERDITEUR D ELECTRICITE STATIQUE ET AERONEF**
FAHRWERK MIT EINEM SYSTEM ZUR ABLEITUNG ELEKTROSTATISCHER LADUNG UND LUFTFAHRZEUG
LANDING GEAR PROVIDED WITH A STATIC ELECTRICITY DISCHARGE SYSTEM AND AIRCRAFT

(30) Priorité: 26.09.2024 FR 2410292
(43) Date de publication de la demande: 01.04.2026
(73) Titulaire: Airbus Helicopters, 13725 Marignane Cedex (FR)
(72) Inventeur: CHATER, Skander, 13001 MARSEILLE (FR); TISON, Pascal, 13250 CORNILLON CONFOUX (FR)
(74) Mandataire: GPI Brevets

(56) Documents cités:
- CN-A- 112 109 908
- CN-U- 213 638 311
- US-A- 2 677 516
- US-A1- 2023 133 313

## Description

La présente invention se situe dans le domaine des dispositifs de dissipation d'électricité statique, et en particulier ceux destinés à équiper les aéronefs.

La présente invention concerne un atterrisseur muni d'un système déperditeur d'électricité statique ainsi qu'un aéronef comportant au moins un tel atterrisseur.

Un aéronef comporte classiquement des organes pour dissiper au sol l'électricité statique accumulée en vol.

Une première solution consiste à obtenir une dissipation de l'électricité statique par les pneumatiques des atterrisseurs. Ces pneumatiques peuvent à cet effet être réalisés à l'aide d'une matière en caoutchouc très chargée en carbone.

Une seconde solution consiste à intégrer sur un atterrisseur un circuit de métallisation débouchant sur un fouet déperditeur d'électricité statique en contact avec le sol. Un tel fouet est aussi dénommé « balai ».

Bien que cette deuxième solution soit efficace, le frottement prolongé de l'extrémité libre du fouet déperditeur d'électricité statique sur le sol tend à le dégrader. Le fouet déperditeur d'électricité statique peut donc devoir être remplacé régulièrement.

En outre, un fouet déperditeur d'électricité statique peut battre en vol lorsque l'atterrisseur est sorti. Ce fouet déperditeur d'électricité statique est alors susceptible de dégrader des pièces environnantes. Un fouet déperditeur d'électricité statique peut par exemple dégrader les couches de protection ou de peinture des pièces environnantes suite à de tels battements, telles qu'une jante de roue ou un étrier de frein par exemple. Le battement d'un fouet déperditeur d'électricité statique peut alors induire une action de maintenance.

Enfin, un fouet déperditeur d'électricité statique est soumis à un risque d'arrachement s'il rencontre un obstacle, notamment lors d'un atterrissage. Un tel obstacle peut à titre illustratif prendre la forme d'une grille.

Dans ce contexte, un atterrisseur connu comporte un amortisseur et un fouet déperditeur d'électricité statique attaché à un piston de l'amortisseur. Cette solution est intéressante, mais n'empêche pas le battement du fouet déperditeur d'électricité statique en vol ou son arrachement lors d'un atterrissage.

Le document CN 108860632 décrit un système de décharge d'électricité statique extensible pour un aéronef. Le système comprend un cylindre de stockage, une tige de décharge d'électricité statique et un actionneur dédié. L'actionneur déplace la tige de décharge d'électricité statique entre une position d'étirement et une position de rétraction selon les besoins. L'actionneur peut prendre diverses formes, telles que notamment la forme d'un système pneumatique, d'un système sensible à la température, d'un système motorisé ou encore d'un système hydraulique.

Le document KR 2020000004409 décrit un système de décharge d'électricité statique pour une automobile coopérant avec un système de freinage.

Le document US 2023/133313 A1 concerne un train d'atterrissage pour un aéronef et comprend une jambe d'atterrissage ayant des extrémités proximale et distale, l'extrémité proximale pouvant être couplée au fuselage de l'aéronef.

La jambe d'atterrissage comprend un amortisseur muni d'un piston mobile par rapport au cylindre entre des positions étendue et rétractée. Une roue est couplée à l'extrémité distale de la jambe d'atterrissage.

Le document US 2 677 516 A divulgue quant à lui des moyens pour réduire la friction d'une roue équipant un train d'atterrissage d'avion.

Le document CN 112 109 908 A présente un dispositif de décharge électrostatique pour hélicoptère. Un tel dispositif de décharge électrostatique comprend un câble en acier et un crochet constitués de matériaux conducteurs. Une extrémité d'un dispositif de décrochage est connectée au dispositif de décharge électrostatique, et l'autre extrémité du dispositif de décrochage est configurée pour se connecter de manière rotative ou se séparer d'un siège de connexion.

Enfin, le document CN 213 638 311 U décrit un autre dispositif de décharge électrostatique pour hélicoptère.

La présente invention a alors pour objet de proposer un atterrisseur muni d'un système de déperdition d'électricité statique innovant visant à limiter au moins un des inconvénients précités.

Selon l'invention, un atterrisseur comporte au moins un organe de contact, un amortisseur et un système de déperdition d'électricité statique, l'amortisseur se comprimant selon un axe d'amortissement, l'amortisseur étant relié à l'organe de contact.

Un tel atterrisseur est destiné à équiper un aéronef, et en particulier un aéronef muni d'une voilure tournante. Un tel aéronef peut comporter plusieurs atterrisseurs, éventuellement rétractables dans une cellule de l'aéronef. L'amortisseur est relié à l'organe de contact via un arbre de rotation autour duquel peut tourner ou pivoter l'organe de contact.

Ce système de déperdition d'électricité statique est remarquable en ce qu'il comporte :
- une armature solidaire de l'arbre de rotation autour duquel tourne l'organe de contact, l'armature étant munie d'un rail de guidage principal et d'une butée basse,
- un coulisseau comportant un degré de mobilité en translation le long du rail de guidage principal selon un axe de guidage,
- un fouet métallique attaché au coulisseau, le fouet présentant une forme allongée et s'étendant du coulisseau vers la butée basse, la butée basse comportant un orifice configuré pour guider en translation le fouet, et
- une pièce d'entraînement reliée à l'amortisseur, et mobile par rapport à l'arbre de rotation, la pièce d'entraînement se déplaçant par rapport à l'armature vers la butée basse, parallèlement à l'axe d'amortissement lorsque l'amortisseur se comprime pour générer un coulissement du coulisseau le long du rail de guidage principal.

L'organe de contact de l'atterrisseur est l'élément de l'atterrisseur entrant en contact avec le sol lors de l'atterrissage d'un aéronef équipé de cet atterrisseur. L'organe de contact peut par exemple comporter une roue, un patin ou encore un ski.

L'armature est solidaire de l'arbre de rotation, et donc fixe par rapport à cet arbre de rotation. L'armature se déplace donc avec cet arbre de rotation. En conséquence, lors d'un atterrissage d'un aéronef équipé de l'atterrisseur, l'armature est sensiblement fixe par rapport au sol, et par exemple sensiblement verticale.

Le rail de guidage principal présente une forme allongée s'étendant principalement parallèlement à l'axe de guidage. Le fouet est fixé au coulisseau et présente une forme allongée s'étendant depuis le coulisseau également principalement parallèlement à cet axe de guidage. Le coulisseau comporte au moins un degré de mobilité en translation par rapport au rail de guidage principal selon l'axe de guidage et peut ainsi coulisser le long du rail de guidage principal parallèlement à cet axe de guidage. Le coulisseau peut être relié au rail de guidage principal par une liaison de type glissière, le coulisseau comportant alors un unique degré de mobilité en translation par rapport à ce rail de guidage principal. Alternativement, le coulisseau peut être relié au rail de guidage principal par une liaison de type pivot glissant, et comporter alors un degré de mobilité en translation et un degré de mobilité en rotation par rapport à ce rail de guidage principal.

La butée basse est située entre le coulisseau et le sol lorsque l'atterrisseur touche le sol. La butée basse comporte un orifice, par exemple de forme circulaire, adapté au passage du fouet.

Durant l'atterrissage d'un aéronef équipé d'un atterrisseur selon l'invention, l'amortisseur se comprime selon l'axe d'amortissement. Cette compression induit le déplacement de la pièce d'entraînement vers le sol. Cette pièce d'entraînement pousse le coulisseau en direction de la butée basse, ce qui génère le déplacement du fouet, au travers de l'orifice de la butée basses jusqu'au sol. De la sorte, lors d'un atterrissage, le fouet est déployé pour venir en contact avec le sol afin de dissiper l'électricité statique accumulée par l'aéronef au cours du vol.

Le fouet est ainsi opérationnel uniquement pendant l'atterrissage, et en particulier pendant une compression de l'amortisseur de l'atterrisseur, le coulisseau se déplaçant à ce moment-là. Ainsi, le fouet est avantageusement dans une position au moins partiellement rétractée en vol, évitant donc les désagréments provoqués par un fouet usuel qui peut battre en vol. De plus, le fouet est fixé au coulisseau, de préférence de façon démontable pour permettre, en cas de besoin, son remplacement.

Ce système de déperdition d'électricité statique s'avère simple en utilisant avantageusement une énergie disponible et un organe existant pour déployer le fouet lors de la phase d'atterrissage.

Enfin, l'atterrisseur peut comporter un circuit de métallisation assurant une continuité électrique entre le fouet et un sous-ensemble susceptible de se charger en électricité statique. Ce circuit de métallisation peut comprendre des pièces métalliques et/ou différentes voies conçues pour assurer une liaison électrique comprenant par exemple des paliers lisses à contacts électriques hélicoïdaux et des tresses de métallisation notamment.

Le système de contrôle selon l'invention peut comprendre une ou plusieurs des caractéristiques qui suivent, prises seules ou en combinaison.

Selon une possibilité, l'amortisseur peut être muni d'un corps et d'un piston coulissant dans le corps selon l'axe d'amortissement. Le piston peut alors être relié à l'arbre de rotation et la pièce d'entraînement peut être solidaire du corps. Dans ce cas, la pièce d'entraînement se déplace avec le corps de l'amortisseur, et l'armature se déplace avec le piston.

Inversement, le corps de l'amortisseur peut être relié à l'arbre de rotation et la pièce d'entraînement peut être solidaire du piston. Dans ce cas, la pièce d'entraînement se déplace avec le piston de l'amortisseur et l'armature se déplace avec le corps.

Selon une autre possibilité compatible avec les précédentes, l'axe de guidage peut être parallèle à l'axe d'amortissement. Dans ce cas, le coulisseau coulisse le long du rail de guidage principal parallèlement à l'axe d'amortissement de l'amortisseur.

Selon une autre possibilité compatible avec les précédentes, l'armature peut comporter un rail de guidage secondaire, la pièce d'entraînement comportant un degré de mobilité en translation le long du rail de guidage secondaire et coulissant ainsi le long de ce rail de guidage secondaire.

La pièce d'entraînement peut être reliée au rail de guidage secondaire par une liaison de type glissière, la pièce d'entraînement comportant alors un unique degré de mobilité en translation par rapport à ce rail de guidage secondaire. Alternativement, la pièce d'entraînement peut être reliée au rail de guidage secondaire par une liaison de type pivot glissant, et peut comporter alors un degré de mobilité en translation et un degré de mobilité en rotation par rapport à ce rail de guidage secondaire.

Le rail de guidage secondaire peut par exemple être de forme allongée et s'étendre selon un axe complémentaire parallèle à l'axe de guidage. Les rails de guidage principal et secondaire sont dans ce cas parallèles.

Selon une autre possibilité compatible avec les précédentes, le fouet peut présenter une forme allongée et s'étendre du coulisseau vers la butée basse, voire au-delà de la butée basse. Le fouet peut par exemple s'étendre du coulisseau vers la butée basse parallèlement à l'axe de guidage. Le fouet peut être au moins partiellement, voire entièrement, métallique, pour permettre la transmission d'un courant électrique, et de fait, la dissipation d'électricité statique lors de son contact avec le sol. Le fouet peut par exemple comporter un câble ou une tresse métallique.

Selon une autre possibilité compatible avec les précédentes, le système de déperdition d'électricité statique peut comporter un ressort de remontée agencé entre le coulisseau et la butée basse, le ressort de remontée se comprimant entre le coulisseau et la butée basse lorsque l'amortisseur se comprime.

Le ressort de remontée contribue ainsi à la remontée du coulisseau le long du rail de guidage principal, et par suite du fouet, une fois que l'amortisseur se détend. Le ressort de remontée peut comprendre par exemple un ressort hélicoïdal de compression.

Selon une autre possibilité compatible avec les précédentes, la pièce d'entraînement peut être solidaire du coulisseau. La pièce d'entraînement peut être par exemple fixée au coulisseau par un organe de fixation, tel qu'une ou plusieurs vis, ou par un crochet, voire peut être soudée au coulisseau. Dans ce cas, la pièce d'entraînement provoque également la remontée du coulisseau, à savoir un coulissement du coulisseau l'éloignant de la butée basse, et par suite, du fouet lorsque l'amortisseur se détend.

Alternativement, la pièce d'entraînement peut être en contact, voire en appui avec le coulisseau, provoquant ainsi le coulissement du coulisseau en direction de la butée basse, et par suite, le déploiement du fouet, lors de la compression de l'amortisseur. Dans ce cas, la présence d'un ressort de remontée provoque la remontée du coulisseau, et par suite, du fouet, lorsque l'amortisseur se détend jusqu'à venir en butée contre la pièce d'entraînement ou contre une butée haute, le coulisseau étant positionné entre les butées haute et basse.

Selon une autre possibilité, lorsque le système de déperdition d'électricité statique comporte le ressort de remontée tel que précédemment décrit, l'armature peut comporter une butée haute jusqu'à laquelle le coulisseau coulisse le long du rail de guidage principal selon l'axe de guidage sous une action du ressort de remontée comprimé, le coulisseau étant positionné entre les butées haute et basse. L'armature peut aussi comporter une rampe inclinée par rapport à l'axe de guidage et le coulisseau peut comporter un support ainsi qu'un tiroir et un ressort de rappel, le tiroir comportant un degré de mobilité en translation par rapport au support selon un axe de coulissement non parallèle à l'axe de guidage pour coulisser par rapport au support, le tiroir comportant une excroissance configurée pour coopérer avec la rampe pour provoquer un déplacement du tiroir par rapport au support selon l'axe de coulissement entre une position sortie et une position rentrée, le ressort de rappel s'opposant au déplacement du tiroir de la position sortie vers la position rentrée, la pièce d'entraînement et le tiroir étant partiellement à l'aplomb l'un de l'autre, parallèlement à l'axe de guidage AX2 lorsque le tiroir est à la position sortie, la pièce d'entraînement et le tiroir n'étant pas à l'aplomb l'un de l'autre, parallèlement à l'axe de guidage, lorsque le tiroir est à la position rentrée.

Ainsi, tant que l'excroissance n'est pas en contact avec la rampe, le tiroir est en position sortie par rapport au support du coulisseau et la pièce d'entraînement. La pièce d'entrainement est partiellement à l'aplomb du tiroir, une partie de la pièce d'entraînement étant en recouvrement avec le tiroir parallèlement à l'axe de guidage. La pièce d'entrainement peut alors être ou venir en contact, voire en appui, sur ce tiroir, notamment lors d'une compression de l'amortisseur. En conséquence, lors de la compression de l'amortisseur, par exemple pendant un atterrissage, le déplacement de la pièce d'entraînement provoque le coulissement du coulisseau vers la butée basse, par l'intermédiaire du tiroir, et de fait, le déploiement du fouet.

Ensuite, dès que l'excroissance entre en contact avec la rampe, le déplacement de la pièce d'entraînement et du coulisseau vers la butée basse, provoquent, par interférence de forme entre la rampe et l'excroissance, un déplacement du tiroir par rapport au support selon l'axe de coulissement de la position sortie vers la position rentrée. Tant que le tiroir n'est pas en position rentrée par rapport au support, la pièce d'entraînement est toujours partiellement à l'aplomb du tiroir, et par suite en contact, voire en appui, sur le tiroir, et le déplacement de la pièce d'entraînement provoque le coulissement du coulisseau vers la butée basse, par l'intermédiaire du tiroir, et de fait, le déploiement du fouet.

Dès que le tiroir atteint la position rentrée par rapport au support, la pièce d'entraînement n'est plus à l'aplomb du tiroir, aucune partie de la pièce d'entraînement n'étant en recouvrement avec le tiroir parallèlement à l'axe de guidage. La pièce d'entraînement n'est alors plus en contact, voire en appui, sur le tiroir. En conséquence, le déplacement de la pièce d'entraînement ne provoque plus le coulissement du coulisseau vers la butée basse, ni le déplacement du fouet. En outre, la pièce d'entraînement est configurée pour ne jamais être en superposition parallèlement à l'axe de guidage avec l'excroissance, quelle que soit la position du tiroir par rapport au support.

Au contraire, sous l'action du ressort de remontée, qui a été comprimé entre le coulisseau et la butée basse pendant le coulissement du coulisseau vers la butée basse, le coulisseau coulisse en sens inverse, à savoir pour s'éloigner de la butée basse, jusqu'à atteindre la butée haute. Ce coulissement du coulisseau vers la butée haute, s'accompagne d'une rétractation du fouet au travers de l'orifice de la butée basse.

Le système de déperdition d'électricité statique de l'atterrisseur selon l'invention permet ainsi une rétractation automatique du fouet une fois la dissipation de l'électricité statique effectuée. En effet, une telle dissipation nécessite un contact du fouet avec le sol pendant une durée inférieure à une seconde. Dès lors, une fois ce contact établi pendant une durée suffisante, le système de déperdition d'électricité statique de l'atterrisseur selon l'invention permet avantageusement une telle rétraction, de façon rapide et sans l'utilisation d'un actionneur hydraulique, électrique ou pneumatique. Une telle rétraction contribue à limiter l'usure du fouet en réduisant son contact avec le sol au strict nécessaire, en évitant en particulier ce contact lors du roulage de l'aéronef. Une telle rétraction réduit également le risque d'arrachement du fouet au sol lors de tels roulages.

L'axe de coulissement du tiroir par rapport au support peut être par exemple perpendiculaire à l'axe de guidage, afin notamment de maximiser le déplacement de ce tiroir par rapport au support.

En outre, la position et l'inclinaison de la rampe par rapport à l'axe de guidage détermine la longueur du fouet dépassant de la butée basse au moment où le tiroir atteint la position rentrée. La rampe peut être positionnée par rapport à l'organe de contact de sorte que le tiroir soit à la position rentrée lorsque le fouet dépasse de la butée basse d'une distance déployée prédéterminée.

La distance déployée prédéterminée peut être par exemple supérieure à une distance entre la butée basse et le sol, lorsque l'atterrisseur est en contact avec le sol.

En particulier, si l'organe de contact comporte une roue et si la butée basse est positionnée à la même hauteur qu'un axe de rotation de cette roue, la distance déployée prédéterminée est par exemple supérieure au rayon de la roue.

Selon une autre possibilité compatible avec les précédentes, lorsque le piston de l'amortisseur est dans une position maximale sortie par rapport au corps, le fouet peut dépasser de la butée basse d'une distance de sortie non nulle. La position maximale sortie du piston par rapport au corps est atteinte lorsque l'organe de contact pend dans le vide sous l'amortisseur, par exemple lorsque l'aéronef équipé de l'atterrisseur est en vol et que l'atterrisseur est non retracté, s'il s'agit d'un atterrisseur rétractable. Le fouet s'étend alors sous la butée basse. Toutefois, la longueur du fouet dépassant sous la butée basse est faible, de l'ordre de quelques centimètres, ce qui évite au fouet de battre ou que le fouet entre en contact et dégrade des pièces de l'atterrisseur, tels que l'armature, l'amortisseur et/ou l'organe de contact.

Alternativement, lorsque le piston est dans la position maximale sortie par rapport au corps, le fouet peut ne pas saillir au-delà de la butée basse. De la sorte, le fouet ne dépasse pas de la butée basse lorsque l'aéronef équipé de l'atterrisseur est en vol évitant ainsi, tout battement du fouet pendant le vol de l'aéronef, et par suite toute dégradation par le fouet des pièces de l'atterrisseur.

Selon une autre possibilité compatible avec les précédentes, le système peut comporter une gaine compressible agencée entre le coulisseau et la butée basse et dans laquelle est positionné le fouet. Le cas échéant, le ressort de remontée peut être positionné autour de la gaine. Cette gaine peut permettre, lors du coulissement du fouet, d'une part de guider le fouet, et d'autre part de guider le ressort de remontée le cas échéant. Cette gaine est configurée pour se compresser lors du coulissement du coulisseau, sans gêner le coulissement du coulisseau, ni le déplacement du fouet, ni la compression du ressort de remontée le cas échéant.

Selon une autre possibilité compatible avec les précédentes, le système peut comporter le ressort de remontée et un tube compressible agencé entre le coulisseau et la butée basse, le ressort de remontée étant positionné dans le tube. Ce tube compressible peut permettre, d'une part de guider le ressort de remontée lors du coulissement du fouet, et d'autre part de le protéger de l'impact d'objets susceptibles par exemple de le heurter lors d'un vol ou d'un roulage de l'aéronef équipé de l'atterrisseur. Ce tube est configuré pour se compresser lors du coulissement du coulisseau, sans gêner le coulissement du coulisseau, ni la compression du ressort de remontée.

Selon une autre possibilité compatible avec les précédentes, l'atterrisseur peut comporter un carénage encadrant partiellement ou totalement le système de déperdition d'électricité statique. Ce carénage permet de protéger le système de déperdition d'électricité statique, et notamment l'armature, le coulisseau, le fouet, le ressort de remontée et la pièce d'entraînement, de l'impact d'objets susceptibles par exemple de le heurter lors d'un vol ou d'un roulage de l'aéronef. Ce carénage peut aussi permettre de réduire la traînée aérodynamique générée par le système de déperdition d'électricité statique lors d'un vol.

La présente invention a également pour objet un aéronef comportant au moins un atterrisseur tel que précédemment décrit. L'amortisseur peut être relié à une structure de l'aéronef, le fouet étant relié électriquement à cette structure. L'amortisseur peut être relié à la structure par son corps, le piston étant relié à l'organe de contact, ou inversement. Le ou les atterrisseurs peuvent être fixes, ou éventuellement rétractables.

L'aéronef peut comporter un circuit de métallisation intégré partiellement à l'atterrisseur et reliant électriquement le fouet à la structure de l'aéronef. Ce circuit de métallisation contribue ainsi, lorsque le fouet est en contact avec le sol lors de l'atterrissage de l'aéronef, à une continuité électrique entre la structure et le sol, ce qui permet de dissiper l'électricité statique accumulée et emmagasinée pendant le vol de l'aéronef.

L'aéronef peut comporter plusieurs atterrisseurs, dont par exemple deux atterrisseurs principaux et un atterrisseur auxiliaire. Dans ce cas, les deux atterrisseurs principaux peuvent par exemple être selon l'invention et comporter un système de déperdition d'électricité statique tel que précédemment décrit. Alternativement, un seul des deux atterrisseurs principaux peut être selon l'invention et comporter à ce titre un tel système de déperdition d'électricité statique.

Alternativement tous les atterrisseurs de l'aéronef peuvent comporter un tel système de déperdition d'électricité statique.

L'invention et ses avantages apparaîtront avec plus de détails dans le cadre de la description qui suit avec des exemples donnés à titre illustratif en référence aux figures annexées qui représentent :
- la figure 1, une vue d'un atterrisseur selon l'invention,
- la figure 2, une vue schématique d'un premier mode de réalisation de l'atterrisseur,
- la figure 3, une vue schématique d'un deuxième mode de réalisation de l'atterrisseur,
- la figure 4, une vue en perspective d'un troisième mode de réalisation de l'atterrisseur,
- la figure 5, une vue schématique du troisième mode de réalisation,
- la figure 6, une vue schématique du troisième mode de réalisation,
- la figure 7, une vue schématique du troisième mode de réalisation,
- la figure 8, une vue schématique du troisième mode de réalisation,
- la figure 9, une vue schématique du troisième mode de réalisation,
- la figure 10, une vue schématique du troisième mode de réalisation, et
- la figure 11, une vue d'un aéronef équipé d'atterrisseurs.

Les éléments présents dans plusieurs figures distinctes sont affectés d'une seule et même référence.

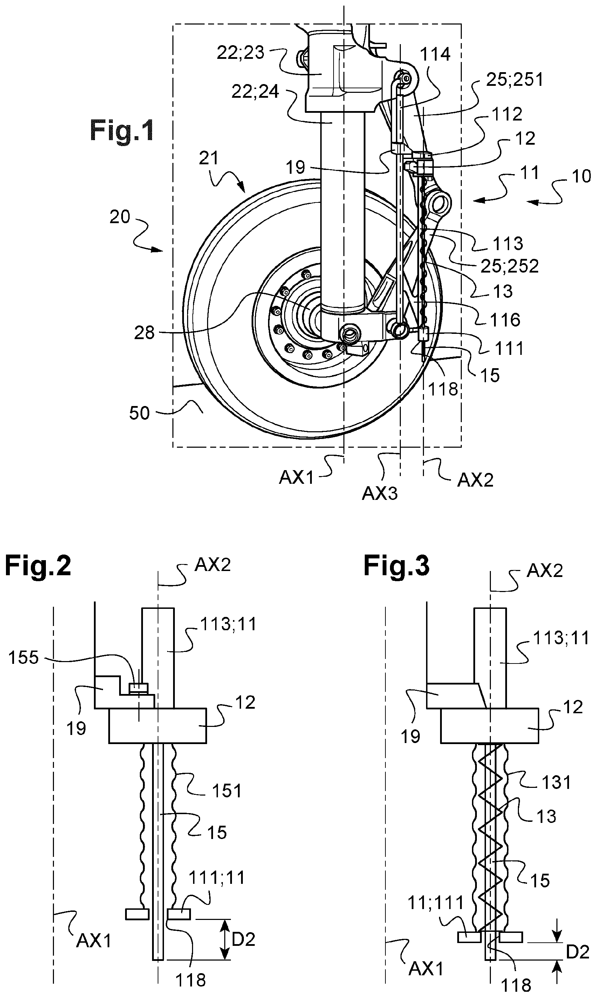

La figure 1 représente un atterrisseur 20 d'un aéronef selon l'invention. Cet atterrisseur 20 comporte au moins une organe de contact 21 qui est au contact du sol 50 lorsque l'aéronef est posé au sol, un amortisseur 22 et un système 10 de déperdition d'électricité statique. L'organe de contact 21 tourne autour d'un arbre de rotation 28. Selon l'exemple représenté, l'organe de contact 21 peut comporter une roue tournant autour d'une fusée. Alternativement ou de façon complémentaire, l'organe de contact 21 peut comporter un patin ou un ski.

L'amortisseur 22 est muni d'un corps 23 et d'un piston 24 coulissant dans le corps 23 selon un axe d'amortissement AX1. L'amortisseur 22 est relié à l'organe de contact 21. Par exemple, l'amortisseur 22 porte directement ou indirectement l'arbre de rotation 28, l'organe de contact étant porté par cet arbre de rotation 28. De plus, l'atterrisseur 20 peut comporter un compas 25 reliant le corps 23 et le piston 24, ce compas 25 étant muni d'un premier bras 251 articulé au corps 23 et d'un second bras 252 articulé au piston 24. Cet atterrisseur 20 est destiné à équiper un aéronef, en particulier un aéronef à voilure tournante.

Le système 10 de déperdition d'électricité statique comporte une armature 11 solidaire de l'arbre de rotation 28, un coulisseau 12, un fouet 15 et une pièce d'entraînement 19. L'armature 11 est donc fixe par rapport à l'arbre de rotation 28, et par suite par rapport au sol 50 lorsque l'atterrisseur 20 est au sol. L'armature 11 peut être fixée directement ou indirectement à cet arbre de rotation 28, ou à l'amortisseur 22, et en particulier au piston 24, selon l'exemple représenté sur la figure 1.

L'armature 11 comporte un rail de guidage principal 113 et une butée basse 111. La butée basse 111 présente un anneau solidarisé au rail de guidage principal 113. La butée basse 111 et le rail de guidage principal 113 peuvent former une seule et même pièce. Le rail de guidage principal 113 peut par exemple être allongé et s'étendre selon un axe de guidage AX2. La butée basse 111 peut par exemple être agencée à l'extrémité du rail de guidage principal 113 la plus proche du sol 50.

Le coulisseau 12 coulisse le long du rail de guidage principal 113 selon l'axe de guidage AX2. Ce coulisseau 12 est agencé de sorte que la butée basse 111 soit située entre le coulisseau 12 et le sol 50 lorsque l'atterrisseur 20 repose sur le sol. Le coulisseau 12 peut être relié au rail de guidage principal 113 par une liaison de type glissière, voire pivot glissant.

Le fouet 15 est au moins partiellement, voire entièrement, métallique et peut à ce titre transmettre un courant électrique. Le fouet 15 est fixé au coulisseau 12, par exemple de façon démontable, pour permettre éventuellement son remplacement. Le fouet 15 présente une forme allongée et s'étend du coulisseau 12 vers la butée basse 111, par exemple parallèlement à l'axe de guidage AX2.

La butée basse 111 comporte un orifice 118, par exemple en forme de cylindre, configuré pour être traversé par le fouet 15 et pour que la butée basse 111 guide en translation le fouet 15.

La pièce d'entraînement 19 est reliée à l'amortisseur 22, et est mobile par rapport à l'arbre de rotation 28. La pièce d'entraînement 19 se déplace ainsi par rapport à l'armature 11 vers le sol 50 lorsque l'amortisseur 22 se comprime. Ce déplacement de la pièce d'entraînement 19 peut être effectué parallèlement à l'axe d'amortissement AX1. Au cours de ce déplacement, la pièce d'entraînement 19 génère le coulissement du coulisseau 12 le long du rail de guidage principal 113, vers la butée basse 111.

De plus, l'atterrisseur 20 peut comporter, de façon usuelle, un circuit de métallisation (non représenté) assurant une continuité électrique entre le fouet 15 et les composants de l'atterrisseur 20. Ce circuit de métallisation peut comprendre les pièces métalliques en contact entre ces composants jusqu'au fouet 15. Ce circuit de métallisation peut, alternativement ou de façon complémentaire, comporter des liaisons électriques, assurées par exemple par des paliers lisses à contacts électriques hélicoïdaux et/ou des tresses de métallisation.

L'atterrisseur 20 permet d'assurer le déplacement de la pièce d'entraînement 19 vers la butée basse 111, lors de la compression de l'amortisseur 22. Ce déplacement de la pièce d'entraînement 19 provoque le coulissement du coulisseau 12 en direction de la butée basse 111 et du sol 50, et par suite, le déplacement du fouet 15 au-delà de la butée basse 111, au travers de l'orifice 118, jusqu'au sol 50. De la sorte, lors de la compression de l'amortisseur 22, le fouet 15 se déploie pour entrer en contact avec le sol 50 ce qui permet d'obtenir une liaison électrique entre le système 10 de déperdition d'électricité statique de l'électricité et le sol 50, et par suite une dispersion de l'électricité statique accumulée par l'atterrisseur 20 et par tout élément relié à l'atterrisseur 20.

Le fouet 15 peut avantageusement être déployé uniquement pendant la compression de l'amortisseur 22, le fouet 15 restant dans une position au moins partiellement rétracté lorsque l'atterrisseur 20 n'est pas en contact avec le sol 50, notamment en vol. De la sorte, les désagréments d'un fouet usuel, tel que son battement et la dégradation des composants situés à proximité du fouet 15, sont évités.

Selon un autre aspect et l'exemple représenté, le piston 24 de l'amortisseur 22 peut être relié à l'organe de contact 21 par l'intermédiaire de l'arbre de rotation 28 et la pièce d'entraînement 19 est solidaire du corps 23. Alternativement, le corps 23 peut être relié à l'organe de contact 21 par l'intermédiaire de l'arbre de rotation 28, la pièce d'entraînement 19 étant alors solidaire avec le piston 24.

Un premier mode de réalisation de l'atterrisseur 20 selon l'invention est représenté partiellement et de façon schématique sur la figure 2. Selon ce premier mode de réalisation, la pièce d'entraînement 19 est solidaire du coulisseau 12. La pièce d'entraînement 19 peut être fixée au coulisseau 12 de façon usuelle, par exemple de façon démontable, à l'aide d'une ou de plusieurs vis 155, voire de façon non démontable, par soudure.

Dans ce cas, la pièce d'entraînement 19 entraîne non seulement le coulissement du coulisseau 12, et par suite le déplacement du fouet 15 en direction de la butée basse 111 et du sol 50 lors de la compression de l'amortisseur 22, mais également leurs remontées, à savoir en s'éloignant de la butée basse 111 et du sol 50 lorsque l'amortisseur 22 se détend. Dès lors, dès que le fouet 15 est en contact avec le sol 50, une continuité électrique peut se produire entre le sol 50, le fouet 15 et les éléments en contact électrique avec le fouet 15, de sorte à dissiper une éventuelle quantité d'électricité statique accumulée par ces éléments pendant un vol.

Un deuxième mode de réalisation de l'atterrisseur 20 selon l'invention est représenté partiellement et de façon schématique sur la figure 3. Selon ce deuxième mode de réalisation, le système 10 de déperdition d'électricité statique comporte un ressort de remontée 13 agencé entre le coulisseau 12 et la butée basse 111, le ressort de remontée 13 se comprimant entre le coulisseau 12 et la butée basse 111 lorsque l'amortisseur 22 se comprime.

Selon ce deuxième mode de réalisation, la pièce d'entraînement 19 est partiellement à l'aplomb du coulisseau 12, à savoir en superposition parallèlement à l'axe de guidage avec le coulisseau 12. La pièce d'entraînement 19 est en conséquence en contact ponctuel, linéaire ou surfacique sur le coulisseau 12 lorsque l'amortisseur 22 se comprime, provoquant alors le coulissement du coulisseau 12, et par suite le déplacement du fouet 15, en direction de la butée basse 111 et du sol 50.

Inversement, la détente de l'amortisseur 22 entraîne un déplacement de la pièce d'entraînement 19 qui s'éloigne de la butée basse 111 et du sol 50. Simultanément, le ressort de remontée 13 provoque le coulissement du coulisseau 12 le long du rail de guidage principal 113 selon l'axe de guidage AX2, et par suite le déplacement du fouet 15, le coulisseau 12 et le fouet 15 s'éloignant de la butée basse 111 et du sol 50. Le coulissement du coulisseau 12 peut être arrêté par la pièce d'entraînement 19, qui fait office de butée haute.

Alternativement, l'armature 11 peut comporter une butée haute 112, représentée par exemple sur la figure 1, jusqu'à laquelle le coulisseau 12 coulisse le long du rail de guidage principal 113 selon l'axe de guidage AX2 sous une action du ressort de remontée 13 comprimé. La butée haute 112 est positionnée sur l'armature 11 de sorte à être située entre une position extrême de la pièce d'entrainement 19 correspondant à une position maximale sortie de l'amortisseur 22, voire au-delà de cette position extrême. Cette position maximale sortie de l'amortisseur 22 est atteinte en vol quand aucune force, hormis la force gravitationnelle, n'est exercée verticalement sur l'organe de contact 21.

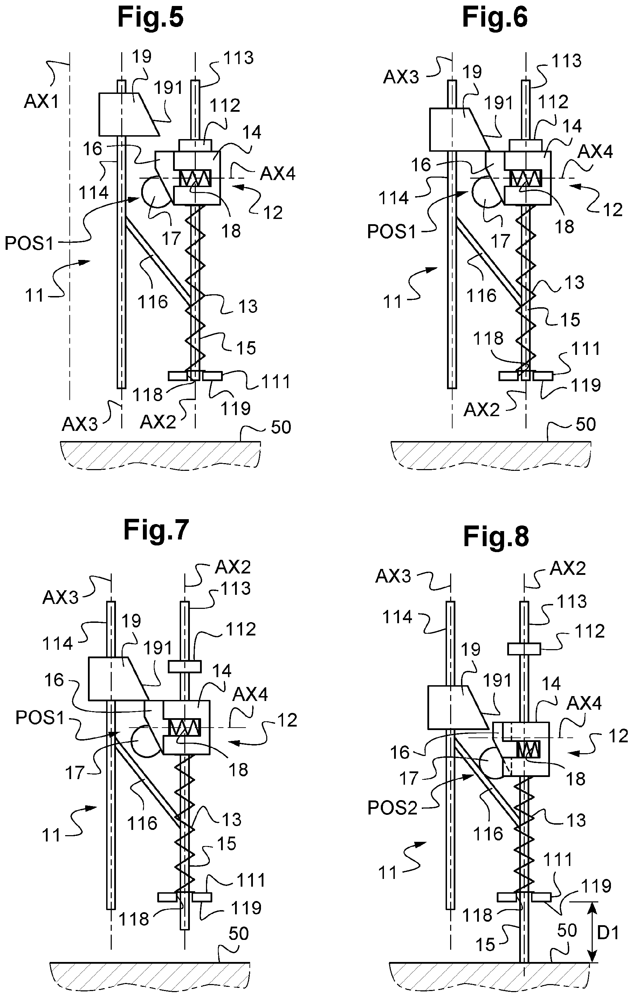

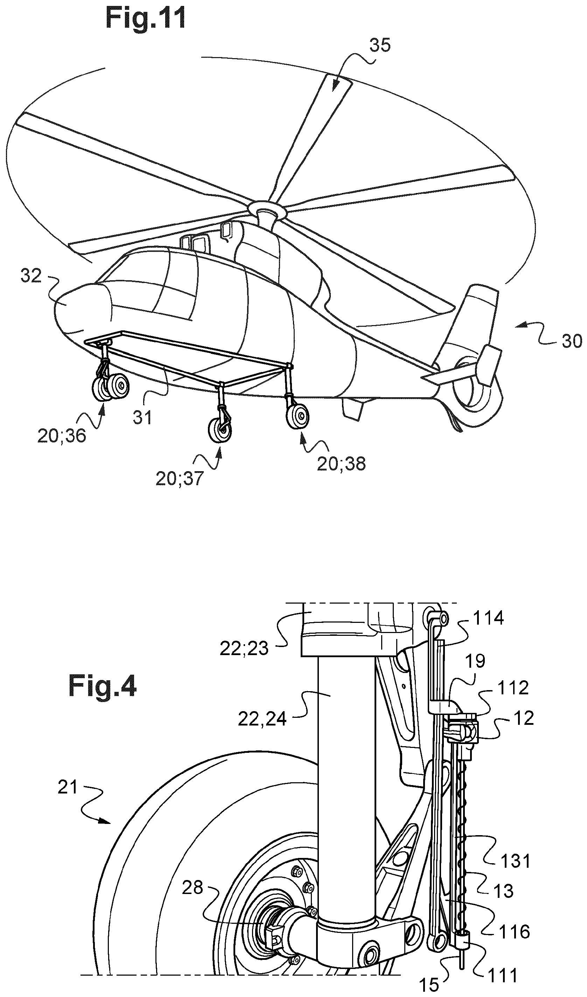

Un troisième mode de réalisation de l'atterrisseur 20 selon l'invention est représenté en perspective sur la figure 4, et partiellement et de façon schématique sur les figures 5 à 10. Selon ce troisième mode de réalisation, le système 10 de déperdition d'électricité statique comporte un ressort de remontée 13 agencé entre le coulisseau 12 et la butée basse 111, le ressort de remontée 13 se comprimant entre le coulisseau 12 et la butée basse 111 lorsque l'amortisseur 22 se comprime.

L'armature 11 comporte une butée haute 112 fixée au rail principal de guidage 113. Le coulisseau 12 est en butée selon l'axe de guidage AX2 contre la butée haute 112 sous une action du ressort de remontée 13, comme représenté sur la figure 5, lorsque l'amortisseur 22 est complétement détendu et donc dans sa position maximale sortie. Le coulisseau 12 est alors positionné entre les butées haute 112 et basse 111.

L'armature 11 comporte également une rampe 116 fixée au rail principal de guidage 113, selon l'exemple représenté, et inclinée par rapport à l'axe de guidage AX2. Cette rampe 116 est située selon l'axe de guidage AX2 entre les butées haute 112 et basse 111.

Le coulisseau 12 comporte un support 14, un tiroir 16 et un ressort de rappel 18. Le tiroir 16 comporte un degré de mobilité en translation par rapport au support 14 le long d'un axe de coulissement AX4 non parallèle à l'axe de guidage AX2, pour coulisser par rapport au support 14. L'axe de coulissement AX4 peut être perpendiculaire à l'axe de guidage AX2 comme représenté sur les figures 5 à 10. Toutefois, d'autres configurations sont envisageables entre les axes de coulissement AX4 et secondaire AX2, tant qu'ils ne sont pas parallèles.

Le tiroir 16 comporte également une excroissance 17 configurée pour coopérer avec la rampe 116 pour provoquer un déplacement du tiroir 16 par rapport au support 14 selon l'axe de coulissement AX4 entre une position sortie POS1 et une position rentrée POS2. Le ressort de rappel 18 s'oppose au déplacement du tiroir 16 de la position sortie POS1 vers la position rentrée POS2, et provoque ainsi le déplacement du tiroir 16 de la position rentrée POS2 vers la position sortie POS1, lorsque qu'aucune force n'est appliquée sur le tiroir 16 ou l'excroissance 17. Le tiroir 16 comporte en outre une butée de fin de course coopérant avec le support 14 et bloquant le tiroir à la position sortie POS1 par rapport au support 14 sous l'action du ressort de rappel 18.

Les figures 5 à 10 représentent le système 10 de déperdition d'électricité statique à différents instants lors de la compression puis de la détente de l'amortisseur 22.

Comme précédemment évoqué, la figure 5 représente le système 10 lorsque l'amortisseur 22 est complétement détendu, soit à la position maximale sortie. Le coulisseau 12, et en particulier le support 14 de ce coulisseau 12, est en appui contre la butée haute 112 et la pièce d'entraînement 19 est située au-dessus de la butée haute 112 parallèlement à l'axe de guidage AX2. Le tiroir 16 est alors à la position sortie POS1 par rapport au support 14. La pièce d'entraînement 19 est partiellement à l'aplomb du tiroir 16, selon l'axe de guidage AX2, sans être en contact avec lui.

Lors de la compression de l'amortisseur 22, la pièce d'entraînement 19 se déplace en direction de la butée basse 111 et du sol 50, et vient en contact, par exemple ponctuel, linéique ou surfacique, avec le tiroir 16 du coulisseau 12, comme représenté sur la figure 6, grâce à sa position en aplomb de la pièce d'entraînement 19 par rapport au tiroir 16, le tiroir 16 étant toujours à la position sortie POS1 par rapport au support 14.

La compression de l'amortisseur 22 se poursuit, et la pièce d'entraînement 19 continue son déplacement en direction de la butée basse 111 et du sol 50, et déplace, grâce à l'appui sur le tiroir 16, le coulisseau 12, et par suite le fouet 15, vers le sol 50, comme représenté sur la figure 7. Le fouet 15 dépasse alors de la butée basse 111, en traversant de part en part l'orifice 118.

Lors du coulissement du coulisseau 12 vers la butée basse 111, l'excroissance 17 entre en contact avec la rampe 116, ce qui provoque le déplacement du tiroir 16 par rapport au support 14, jusqu'à la position rentrée POS2 comme représenté sur la figure 8. A cette position rentrée POS2, la pièce d'entraînement 19 et le tiroir 16 ne sont plus à l'aplomb l'un de l'autre, selon l'axe de guidage AX2. En conséquence, la pièce d'entraînement 19 n'est plus en contact sur le tiroir 16, et continue alors son déplacement en direction du sol 50 sans entraîner le coulisseau 12, ni le fouet 15. En outre, la pièce d'entraînement 19 est configurée pour ne jamais entrer en contact avec l'excroissance 17, quelle que soit la position du tiroir 16.

On constate que la position de la rampe 116 permet que le tiroir 16 atteigne la position rentrée POS2 après que le fouet 15 soit entré en contact avec le sol 50. La rampe 116 est ainsi avantageusement positionnée par rapport à l'organe de contact 21 de sorte que le tiroir 16 soit à la position rentrée POS2 lorsque le fouet 15 dépasse de la butée basse 111 d'une distance déployée D1 prédéterminée permettant ce contact avec le sol 50. La distance déployée D1 prédéterminée est par exemple supérieure à une distance entre la butée basse 111 et le sol 50 lorsque l'atterrisseur 20 est en contact avec le sol 50. Selon l'exemple représenté sur la figure 1, la butée basse 111 est positionnée à proximité de l'arbre de rotation 28, et à la même hauteur par rapport au sol 50 que cet arbre de rotation 28. La distance déployée D1 prédéterminée peut être dans ce cas égale ou supérieure au rayon de la roue de l'organe de contact 21.

Une continuité électrique est alors assurée entre le sol, le fouet 15 et les éléments en contact électrique avec le fouet 15, de sorte à dissiper une éventuelle quantité d'électricité statique accumulée par ces éléments.

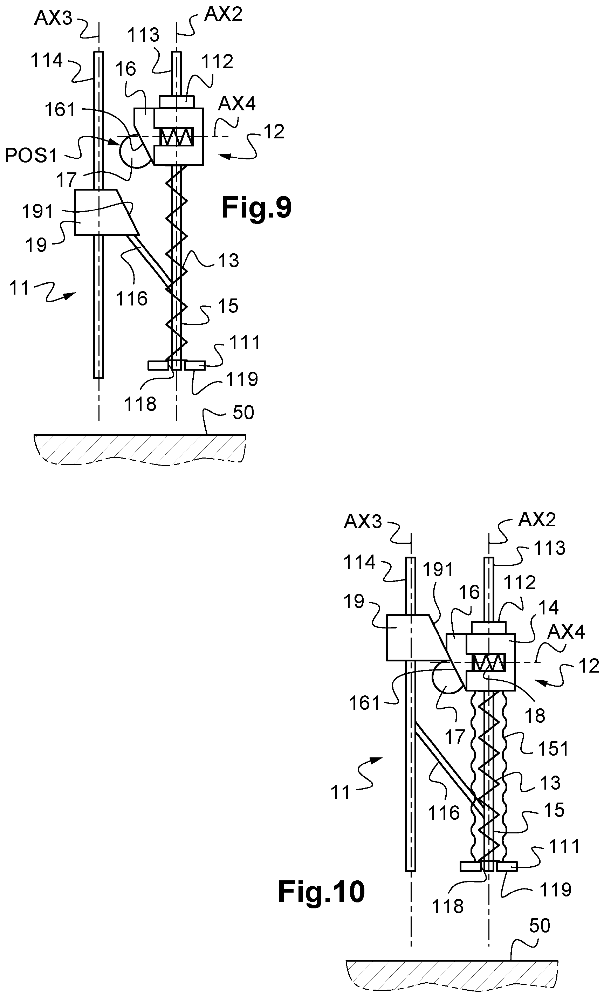

Ensuite, la compression de l'amortisseur 22 se poursuit, et la pièce d'entraînement 19 continue son déplacement en direction du sol 50, alors que le coulisseau 12 coulisse maintenant jusqu'à la butée haute 112, sous l'action du ressort de remontée 13, comme représenté sur la figure 9. Ce coulissement du coulisseau 12 entraîne alors le déplacement du fouet 15, vers la butée haute 112. Le fouet 15 se rétracte ainsi et n'est plus en contact avec le sol 50. Le tiroir 16 est alors revenu à la position sortie POS1 par rapport au support 14 sous l'action du ressort de rappel 18, dès que l'excroissance n'est plus en contact avec la rampe 116.

Enfin, suite à cette compression, l'amortisseur 22 se détend, provoquant le déplacement de la pièce d'entraînement 19 en s'éloignant du sol 50. Lors de ce déplacement, le tiroir 16 étant revenu à la position sortie POS1, le tiroir 16 est partiellement à l'aplomb de la pièce d'entraînement 19, selon l'axe de guidage AX2. La pièce d'entraînement 19 entre alors en contact avec le coulisseau 12, et en particulier avec le tiroir 16, qui est en appui contre la butée haute 112, comme représenté sur la figure 10. Avantageusement, au moins un des deux composants parmi la pièce d'entraînement 19 et le tiroir 16 comporte une face inclinée 161,191 provoquant lors d'un contact entre la pièce d'entraînement 19 et le coulisseau 12, lors de la détente de l'amortisseur 22, un déplacement du tiroir 16 par rapport au support 14 de la position sortie POS1 vers la position rentrée POS2. A la position rentrée POS2, la pièce d'entraînement 19 et le tiroir ne sont plus à l'aplomb l'un de l'autre, et la pièce d'entraînement 19 peut alors continuer son déplacement au-delà du coulisseau 12.

La pièce d'entraînement 19 peut ainsi poursuivre son déplacement sans encombre, jusqu'à la fin de la détente de l'amortisseur 22, et atteindre par exemple la position représentée sur la figure 5.

Indépendamment des trois modes de réalisation décrits, l'axe de guidage AX2 peut être parallèle à l'axe d'amortissement AX1 comme représenté sur les figures 2 à 10. Une inclinaison de l'axe de guidage AX2 par rapport à l'axe d'amortissement AX1 est aussi envisageable.

Indépendamment de ces trois modes de réalisation, l'armature 11 peut comporter, de façon optionnelle, un rail de guidage secondaire 114, la pièce d'entraînement 19 comportant un degré de mobilité en translation le long du rail de guidage secondaire 114 de sorte à coulisser le long de ce rail de guidage secondaire 114, comme représenté sur les figures 4 à 10. Ce rail de guidage secondaire 114 peut par exemple être allongé et s'étendre selon un axe complémentaire AX3 parallèle à l'axe de guidage AX2, la pièce d'entraînement 19 coulissant le long du rail de guidage secondaire 114 selon cet axe complémentaire AX3.

Par ailleurs, le système 10 de déperdition d'électricité statique peut comporter une gaine 151 compressible agencée entre le coulisseau 12 et la butée basse 111 et dans laquelle est positionné le fouet 15, comme représenté sur les figures 2 et 10. Cette gaine 151 se déforme et se compresse lors du coulissement du coulisseau 12 en direction de la butée basse 111. Cette gaine 151 permet de guider le fouet 15 lors de ce coulissement, et également de protéger le fouet 15 d'éventuels contacts avec tout objet. De plus, lorsque le système 10 comporte un ressort de remontée 13, le ressort de remontée 13 peut être positionné autour de la gaine 151, comme représenté sur la figure 10, de sorte que la gaine 151 guide le ressort de remontée 13.

Le système 10 de déperdition d'électricité statique peut aussi comporter un tube 131 compressible agencé entre le coulisseau 12 et la butée basse 111 et dans lequel est positionné le ressort de remontée 13, comme représenté sur la figure 3. Ce tube 131 se déforme et se compresse lors du coulissement du coulisseau 12 en direction de la butée basse 111. Ce tube 131 permet ainsi de guider le ressort de remontée 13 lors de ce coulissement et de protéger le ressort de remontée 13, ainsi que le fouet 15, d'éventuels contacts avec tout objet.

En outre, lorsque le piston 24 est dans la position maximale sortie par rapport au corps 23, le fouet 15 peut dépasser de la butée basse 111 d'une distance de sortie D2 non nulle, comme représenté sur les figures 2 et 3. Alternativement, le fouet 15 peut être affleurant à une face inférieure 119 de la butée basse 111, faisant face au sol 50, voire en retrait de cette face inférieure 119, lorsque le piston 24 est dans la position maximale sortie par rapport au corps 23, comme représenté sur les figures 4, 5, 8 et 9.

Selon la figure 11, un aéronef 30, et en particulier un aéronef à voilure tournante, peut comporter un ou des trains d'atterrissage 36,37,38. Par exemple, un aéronef 30 peut comporter trois trains d'atterrissage 36,37,38, comme représenté sur la figure 11, en particulier un train d'atterrissage auxiliaire 36 et deux trains d'atterrissage principaux 37,38. Un tel aéronef 30 comporte notamment une structure 31 d'une cellule 32 de l'aéronef 30, ainsi qu'un ou plusieurs trains d'atterrissage 36,37,38. Ce ou ces trains d'atterrissage 36,37,38 peuvent être fixes, ou rétractables. L'aéronef 30 peut aussi comporter au moins un rotor 35 de sustentation.

Tous les trains d'atterrissage 36,37,38 d'un tel aéronef 30 peuvent comporter un atterrisseur 20 précité, l'amortisseur 22 de chacun de ces atterrisseurs 20 étant relié à la structure 31. Alternativement, un seul train d'atterrissage 36 de l'aéronef 30 peut comporter un atterrisseur 20, ou deux des trains d'atterrissage 36,37,38 peuvent comporter un atterrisseur 20.

Pour chaque atterrisseur 20, l'amortisseur 22 peut être relié à la structure 31 par son corps 23, le piston 24 étant relié à l'organe de contact 21, ou inversement.

Pour chaque atterrisseur 20 muni d'un système de déperdition d'électricité statique, le fouet 15 est relié électriquement à la structure 31 et à la cellule 32 de l'aéronef 30, par exemple par l'intermédiaire d'un circuit de métallisation usuel. Cette liaison électrique entre d'une part le fouet 15 et d'autre part la structure 31 et la cellule 32 contribue à la dissipation de l'électricité statique accumulée et emmagasinée par la cellule 32 et la structure 31 pendant un vol de l'aéronef 30, lorsque le fouet 15 est en contact avec le sol 50 lors de l'atterrissage de l'aéronef 30.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention défini par les revendications.

## Revendications

1. Atterrisseur (20) comportant au moins un organe de contact (21), un amortisseur (22) et un système (10) de déperdition d'électricité statique, ledit amortisseur (22) se comprimant selon un axe d'amortissement (AX1), ledit amortisseur (22) étant relié audit organe de contact (21),
**caractérisé en ce que** ledit système (10) de déperdition d'électricité statique comporte :
- une armature (11) solidaire d'un arbre de rotation (28) autour duquel tourne ledit organe de contact (21), ladite armature (11) étant munie d'un rail de guidage principal (113) et d'une butée basse (111),
- un coulisseau (12) comportant un degré de mobilité en translation le long dudit rail de guidage principal (113) selon un axe de guidage (AX2),
- un fouet (15) métallique attaché audit coulisseau (12), ledit fouet (15) présentant une forme allongée et s'étendant à partir dudit coulisseau (12) vers ladite butée basse (111), ladite butée basse (111) comportant un orifice (118) configuré pour guider en translation ledit fouet (15), et
- une pièce d'entraînement (19) reliée audit amortisseur (22), et mobile par rapport audit arbre de rotation (28), ladite pièce d'entraînement (19) se déplaçant par rapport à ladite armature (11) vers ladite butée basse (111), parallèlement audit axe d'amortissement (AX1) lorsque ledit amortisseur (22) se comprime pour générer un coulissement dudit coulisseau (12) le long dudit rail de guidage principal (113).

2. Atterrisseur (20) selon la revendication 1,
dans lequel ledit amortisseur (22) est muni d'un corps (23) et d'un piston (24) coulissant dans ledit corps (23) selon ledit axe d'amortissement (AX1), ledit piston (24) étant relié audit arbre de rotation (28) et ladite pièce d'entraînement (19) étant solidaire dudit corps (23).

3. Atterrisseur (20) selon la revendication 2,
dans lequel, lorsque ledit piston (24) est dans une position maximale sortie par rapport audit corps (23), ledit fouet (15) dépasse de ladite butée basse (111) d'une distance de sortie (D2) non nulle.

4. Atterrisseur (20) selon l'une quelconque des revendications 1 à 3,
dans lequel ladite armature (11) comporte un rail de guidage secondaire (114), ladite pièce d'entraînement (19) comportant un degré de mobilité en translation le long dudit rail de guidage secondaire (114).

5. Atterrisseur (20) selon l'une quelconque des revendications 1 à 4,
dans lequel ledit système (10) de déperdition d'électricité statique comporte un ressort de remontée (13) agencé entre ledit coulisseau (12) et ladite butée basse (111), ledit ressort de remontée (13) se comprimant entre ledit coulisseau (12) et ladite butée basse (111) lorsque ledit amortisseur (22) se comprime.

6. Atterrisseur (20) selon l'une quelconque des revendications 1 à 5,
dans lequel ladite pièce d'entraînement (19) est solidaire dudit coulisseau (12).

7. Atterrisseur (20) selon la revendication 5,
dans lequel ladite armature (11) comporte une butée haute (112) jusqu'à laquelle ledit coulisseau (12) coulisse le long dudit rail de guidage principal (113) selon ledit axe de guidage (AX2) sous une action dudit ressort de remontée (13) comprimé, ledit coulisseau (12) étant positionné entre lesdites butées haute (112) et basse (111), ladite armature (11) comportant une rampe (116) inclinée par rapport audit axe de guidage (AX2) et ledit coulisseau (12) comporte un support (14) ainsi qu'un tiroir (16) et un ressort de rappel (18), ledit tiroir (16) comportant un degré de mobilité en translation par rapport audit support (14) selon un axe de coulissement (AX4) non parallèle audit axe de guidage (AX2) pour coulisser par rapport audit support (14), ledit tiroir (16) comportant une excroissance (17) configurée pour coopérer avec ladite rampe (116) afin de provoquer un déplacement dudit tiroir (16) par rapport audit support (14) selon ledit axe de coulissement (AX4) entre une position sortie (POS1) et une position rentrée (POS2), ledit ressort de rappel (18) s'opposant audit déplacement dudit tiroir (16) de ladite position sortie (POS1) vers ladite position rentrée (POS2), ladite pièce d'entraînement (19) et ledit tiroir (16) étant partiellement à l'aplomb l'un de l'autre parallèlement à l'axe de guidage AX2 lorsque ledit tiroir (16) est à ladite position sortie (POS1), ladite pièce d'entraînement (19) et ledit tiroir (16) n'étant pas à l'aplomb l'un de l'autre parallèlement à l'axe de guidage AX2 lorsque ledit tiroir (16) est à ladite position rentrée (POS2).

8. Atterrisseur (20) selon la revendication 7,
dans lequel ledit axe de coulissement (AX4) est perpendiculaire audit axe de guidage (AX2).

9. Atterrisseur (20) selon l'une quelconque des revendications 7 à 8,
dans lequel ladite rampe (116) est positionnée par rapport audit organe de contact (21) de sorte que ledit tiroir (16) soit à ladite position rentrée (POS2) lorsque ledit fouet (15) dépasse de ladite butée basse (111) d'une distance déployée (D1) prédéterminée.

10. Atterrisseur (20) selon la revendication 9,
dans lequel ladite distance déployée (D1) prédéterminée est supérieure à une distance entre ladite butée basse (111) et un sol (50) lorsque ledit atterrisseur (20) est en contact avec ledit sol (50).

11. Atterrisseur (20) selon l'une quelconque des revendications 7 à 10,
dans lequel ledit système (10) comporte une gaine (151) compressible agencée entre ledit coulisseau (12) et ladite butée basse (111) et dans laquelle est positionné ledit fouet (15), ledit ressort de remontée (13) étant positionné autour de ladite gaine (151).

12. Atterrisseur (20) selon l'une quelconque des revendications 7 à 11,
dans lequel ledit système (10) comporte un tube (131) compressible agencé entre ledit coulisseau et ladite butée basse (111), ledit ressort de remontée (13) étant positionné dans ledit tube (131).

13. Aéronef (30) comportant au moins un atterrisseur (20) selon l'une quelconque des revendications 1 à 12.

14. Aéronef (30) selon la revendication 13, ledit aéronef (30) comportant plusieurs atterrisseurs dont un seul est selon l'une quelconque des revendications 1 à 12.

## Patentansprüche

1. Landegestell (20) mit mindestens einem Kontaktelement (21), einem Dämpfer (22) und einem System (10) zur Ableitung statischer Elektrizität, wobei der Dämpfer (22) entlang einer Dämpfungsachse (AX1) zusammengedrückt wird, wobei der Dämpfer (22) mit dem Kontaktelement (21) verbunden ist,
**dadurch gekennzeichnet, dass** das System (10) zur Ableitung statischer Elektrizität umfasst:
- einen Rahmen (11), der fest mit einer Drehwelle (28) verbunden ist, um die sich das Kontaktelement (21) dreht, wobei der Rahmen (11) mit einer Hauptführungsschiene (113) und einem unteren Anschlag (111) versehen ist,
- einen Gleitkörper (12), der entlang der Hauptführungsschiene (113) entlang einer Führungsachse (AX2) verschiebbar ist,
- einen an dem Gleitkörper (12) befestigten metallenen Peitschenarm (15), wobei der Peitschenarm (15) eine langgestreckte Form aufweist und sich von dem Gleitkörper (12) in Richtung des unteren Anschlags (111) erstreckt, wobei der untere Anschlag (111) eine Öffnung (118) aufweist, die ausgebildet ist, um den Peitschenarm (15) in Translationsrichtung zu führen, und
- ein Antriebselement (19), das mit dem Dämpfer (22) verbunden und relativ zur Drehwelle (28) beweglich ist, wobei sich das Antriebselement (19) relativ zum Rahmen (11) in Richtung des unteren Anschlags (111) parallel zur Dämpfungsachse (AX1) bewegt, wenn der Dämpfer (22) zusammengedrückt wird, um ein Gleiten des Gleitkörpers (12) entlang der Hauptführungsschiene (113) zu bewirken.

2. Landegestell (20) nach Anspruch 1,
bei dem der Dämpfer (22) mit einem Gehäuse (23) und einem Kolben (24) versehen ist, der in dem Gehäuse (23) entlang der Dämpfungsachse (AX1) gleitet, wobei der Kolben (24) mit der Drehwelle (28) verbunden ist und das Antriebselement (19) fest mit dem Gehäuse (23) verbunden ist.

3. Landegestell (20) nach Anspruch 2,
bei dem, wenn sich der Kolben (24) in einer maximal ausgefahrenen Position relativ zum Gehäuse (23) befindet, der Peitschenarm (15) um einen von Null verschiedenen Ausfahrweg (D2) über den unteren Anschlag (111) übersteht.

4. Landegestell (20) nach einem der Ansprüche 1 bis 3,
bei dem der Rahmen (11) eine sekundäre Führungsschiene (114) aufweist, und das Antriebselement (19) entlang der sekundären Führungsschiene (114) in Translationsrichtung beweglich ist.

5. Landegestell (20) nach einem der Ansprüche 1 bis 4,
bei dem das System (10) zur Ableitung statischer Elektrizität eine Rückstellfeder (13) umfasst, die zwischen dem Gleitkörper (12) und dem unteren Anschlag (111) angeordnet ist, und die Rückstellfeder (13) zwischen dem Gleitkörper (12) und dem unteren Anschlag (111) zusammengepresst wird, wenn der Dämpfer (22) zusammengepresst wird.

6. Landegestell (20) nach einem der Ansprüche 1 bis 5,
bei dem das Antriebselement (19) fest mit dem Gleitkörper (12) verbunden ist.

7. Landegestell (20) nach Anspruch 5,
bei dem der Rahmen (11) einen oberen Anschlag (112) aufweist, bis zu dem der Gleitkörper (12) entlang der Hauptführungsschiene (113) entlang der Führungsachse (AX2) unter der Wirkung der zusammengedrückten Rückstellfeder (13) gleitet, der Gleitkörper (12) zwischen dem oberen Anschlag (112) und dem unteren Anschlag (111) positioniert ist, der Rahmen (11) eine gegenüber der Führungsachse (AX2) geneigte Rampe (116) aufweist und der Gleitkörper (12) einen Träger (14) sowie einen Auszug (16) und eine Rückstellfeder (18) umfasst, wobei der Auszug (16) einen Grad an translatorischer Beweglichkeit relativ zu dem Träger (14) entlang einer zur Führungsachse (AX2) nicht parallelen Gleitachse (AX4) aufweist, um relativ zu dem Träger (14) zu gleiten, wobei der Auszug (16) einen Vorsprung (17) aufweist, der ausgebildet ist, um mit der Rampe (116) so zusammenzuwirken, dass er eine Verschiebung des Auszugs (16) relativ zu dem Träger (14) entlang der Gleitachse (AX4) zwischen einer ausgefahrenen Position (POS1) und einer eingefahrenen Position (POS2) bewirkt, wobei die Rückstellfeder (18) der Bewegung des Auszugs (16) von der ausgefahrenen Position (POS1) in die eingefahrene Position (POS2) entgegenwirkt, wobei das Antriebselement (19) und der Auszug (16) parallel zur Führungsachse AX2 teilweise senkrecht zueinander stehen, wenn sich der Auszug (16) in der ausgefahrenen Position (POS1) befindet, und das Antriebselement (19) und der Auszug (16) parallel zur Führungsachse AX2 nicht senkrecht zueinander stehen, wenn sich der Auszug (16) in der eingefahrenen Position (POS2) befindet.

8. Landegestell (20) nach Anspruch 7,
bei dem die Gleitachse (AX4) senkrecht zur Führungsachse (AX2) steht.

9. Landegestell (20) nach einem der Ansprüche 7 bis 8, bei dem
die Rampe (116) relativ zu dem Kontaktelement (21) so positioniert ist, dass sich der Auszug (16) in der eingefahrenen Position (POS2) befindet, wenn der Peitschenarm (15) um einen vorgegebenen Ausfahrweg (D1) über den unteren Anschlag (111) hinausragt.

10. Landegestell (20) nach Anspruch 9, bei dem
der vorgegebene Ausfahrweg (D1) größer ist als ein Abstand zwischen dem unteren Anschlag (111) und einem Boden (50), wenn das Landegestell (20) mit dem Boden (50) in Kontakt steht.

11. Landegestell (20) nach einem der Ansprüche 7 bis 10,
bei dem das System (10) eine komprimierbare Hülse (151) umfasst, die zwischen dem Gleitkörper (12) und dem unteren Anschlag (111) angeordnet ist und in der der Peitschenarm (15) positioniert ist, und bei dem die Rückstellfeder (13) um die Hülse (151) herum angeordnet ist.

12. Landegestell (20) nach einem der Ansprüche 7 bis 11, bei dem das System (10) ein komprimierbares Rohr (131) umfasst, das zwischen dem Gleitkörper und dem unteren Anschlag (111) angeordnet ist, und die Rückstellfeder (13) in dem Rohr (131) angeordnet ist.

13. Luftfahrzeug (30) mit mindestens einem Landegestell (20) nach einem der Ansprüche 1 bis 12.

14. Luftfahrzeug (30) nach Anspruch 13, wobei das Luftfahrzeug (30) mehrere Landegestelle aufweist, von denen nur eines nach einem der Ansprüche 1 bis 12 ausgebildet ist.

## Claims

1. Landing gear (20) comprising at least one contact member (21), a damper (22) and a static electricity discharge system (10), said damper (22) being compressed along a damping axis (AX1), said damper (22) being connected to said contact member (21),
**characterised in that** said static electricity discharge system (10) comprises:
- a frame (11) integral with a rotation shaft (28), about which said contact member (21) rotates, said frame (11) being provided with a main guide rail (113) and a lower abutment (111),
- a slider (12) comprising a degree of translational mobility along said main guide rail (113) about a guide axis (AX2),
- a metal whisk (15) attached to said slider (12), said whisk (15) having an elongated shape and extending from said slider (12) towards said lower abutment (111), said lower abutment (111) comprising an orifice (118) configured to guide in translation said whisk (15), and
- a drive part (19) connected to said damper (22), and movable with respect to said rotation shaft (28), said drive part (19) moving with respect to said frame (11) towards said lower abutment (111), parallel to said damping axis (AX1) when said damper (22) is compressed to generate a sliding of said slider (12) along said main guide rail (113).

2. Landing gear (20) according to claim 1,
wherein said damper (22) is provided with a body (23) and a piston (24) sliding in said body (23) along said damping axis (AX1), said piston (24) being connected to said rotation shaft (28) and said drive part (19) being integral with said body (23).

3. Landing gear (20) according to claim 2,
wherein, when said piston (24) is in a maximum exit position with respect to said body (23), said whisk (15) exceeds said lower abutment (111) by a non-zero exit distance (D2).

4. Landing gear (20) according to any one of claims 1 to 3,
wherein said frame (11) comprises a secondary guide rail (114), said drive part (19) comprising a degree of translational mobility along said secondary guide rail (114).

5. Landing gear (20) according to any one of claims 1 to 4,
wherein said static electricity discharge system (10) comprises a lift spring (13) arranged between said slider (12) and said lower abutment (111), said lift spring (13) being compressed between said slider (12) and said lower abutment (111) when said damper (22) is compressed.

6. Landing gear (20) according to any one of claims 1 to 5,
wherein said drive part (19) is integral with said slider (12).

7. Landing gear (20) according to claim 5,
wherein said frame (11) comprises an upper abutment (112) to which said slider (12) slides along said main guide rail (113) along said guide axis (AX2) under an action of said compressed lift spring (13), said slider (12) being positioned between said upper (112) and lower (111) abutments, said frame (11) comprising a ramp (116) inclined with respect to said guide axis (AX2) and said slider (12) comprises a support (14), as well as a drawer (16) and a return spring (18), said drawer (16) having a degree of translational mobility with respect to said support (14) along a sliding axis (AX4) non-parallel to said guide axis (AX2) to slide with respect to said support (14), said drawer (16) having a protrusion (17) configured to engage with said ramp (116) in order to cause a movement of said drawer (16) with respect to said support (14) along said sliding axis (AX4) between an exit position (POS1) and a returned position (POS2), said return spring (18) opposing said movement of said drawer (16) from said exit position (POS1) to said returned position (POS2), said drive part (19) and said drawer (16) being partially in vertical alignment with one another, parallel to the guide axis AX2 when said drawer (16) is in said exit position (POS1), said drive part (19) and said drawer (16) not being in vertical alignment with one another, parallel to the guide axis AX2 when said drawer (16) is in said returned position (POS2).

8. Landing gear (20) according to claim 7,
wherein said sliding axis (AX4) is perpendicular to said guide axis (AX2).

9. Landing gear (20) according to any one of claims 7 to 8,
wherein said ramp (116) is positioned with respect to said contact member (21) such that said drawer (16) is at said returned position (POS2) when said whisk (15) exceeds said lower abutment (111) by a predetermined deployed distance (D1).

10. Landing gear (20) according to claim 9,
wherein said predetermined deployed distance (D1) is greater than a distance between said lower abutment (111) and a ground (50) when said landing gear (20) is in contact with said ground (50).

11. Landing gear (20) according to any one of claims 7 to 10,
wherein said system (10) comprises a compressible sheath (151) arranged between said slider (12) and said lower abutment (111) and wherein said whisk (15) is positioned, said return spring (13) being positioned around said sheath (151).

12. Landing gear (20) according to any one of claims 7 to 11,
wherein said system (10) comprises a compressible tube (131) arranged between said slider and said lower abutment (111), said return spring (13) being positioned in said tube (131).

13. Aircraft (30) comprising at least one landing gear (20) according to any one of claims 1 to 12.

14. Aircraft (30) according to claim 13, said aircraft (30) comprising several landing gears, only one of which is according to any one of claims 1 to 12.
